Europäisches Patentamt

European Patent Office

Office européen des brevets

(19)

(11) Numéro de publication : **0 332 534 B1**

(12)  **FASCICULE DE BREVET EUROPEEN**

(45) Date de publication du fascicule du brevet :
30.09.92 Bulletin 92/40

(51) Int. Cl.⁵ : **G01F 23/28**

(21) Numéro de dépôt : **89400646.9**

(22) Date de dépôt : **08.03.89**

(54) Dispositif contacteur à ondes élastiques de Lamb pour la détection de la présence d'un liquide à un niveau prédéterminé.

(30) Priorité : **08.03.88 FR 8802962**

(43) Date de publication de la demande :
**13.09.89 Bulletin 89/37**

(45) Mention de la délivrance du brevet :
**30.09.92 Bulletin 92/40**

(84) Etats contractants désignés :
**BE DE ES GB GR IT NL SE**

(56) Documents cités :
**GB-A- 1 555 549
GB-A- 2 076 536
GB-A- 2 137 348
US-A- 3 744 301
US-A- 4 320 659
ULTRASONICS, vol. 20, no. 1, janvier 1982,
pages 13-17, Butterworth & Co. (Publishers)
LTD; A.B. GILLESPIE et al.: "A newultrasonic
technique for the measurement of liquid
level"**

(73) Titulaire : **MATERIEL ET AUXILIAIRE DE
SIGNALISATION ET DE CONTROLE POUR
L'AUTOMATION
189, Boulevard St Denis
F-92400 Courbevoie (FR)**

(72) Inventeur : **Dieulesaint, Eugène Jean
2 Avenue Francis Berthier
F-94100 Saint-Maur (FR)**
Inventeur : **Royer, Daniel René
11 Rue Edouard Branly
F-91700 Sainte Geneviève des Bois (FR)**
Inventeur : **Legras, Olivier R.
33 Avenue du Président Roosevelt
F-77100 Meaux (FR)**

(74) Mandataire : **Thévenet, Jean-Bruno et al
Cabinet BEAU DE LOMENIE 55 rue
d'Amsterdam
F-75008 Paris (FR)**

EP 0 332 534 B1

## Description

La présente invention a pour object un dispositif contacteur à ondes élastiques de Lamb pour détecter la présence ou l'absence d'un liquide à un niveau prédéterminé dans un réservoir, comprenant des moyens transducteurs d'émission, des moyens transducteurs de réception et des moyens électroniques de traitement des signaux appliqués aux moyens transducteurs d'émission et délivrés par les moyens transducteurs de réception.

On connaît déjà, notamment par le document de brevet US-A-3 744 301, un dispositif indicateur de niveau de liquide dans une cuve, lequel dispositif comprend une ligne de transmission d'ondes acoustiques placée verticalement dans un récipient contenant un liquide et comprenant à une première extrémité un transducteur d'émission pour créer dans la ligne de transmission un train d'ondes élastiques, et à une deuxième extrémité un second transducteur pour délivrer un signal en réponse au train d'ondes élastiques dont l'atténuation est fonction de la quantité de liquide en contact avec la ligne de transmission.

Un tel dispositif présente des difficultés de mise en oeuvre car les transducteurs, qui sont disposés à l'intérieur du récipient contenant le liquide, doivent être munis de moyens de protection pour ne pas être endommagés par le liquide. De plus, les connexions de liaison entre les transducteurs et les circuits électroniques de traitement doivent traverser la paroi du récipient au niveau du transducteur émetteur et du transducteur récepteur.

On connaît également une variante du dispositif précédent dans laquelle la ligne de transmission et les transducteurs placés aux deux extrémités opposées de la ligne sont disposés sensiblement dans un plan horizontal. Il est possible dans ce cas de ne réaliser qu'une seule ouverture dans la paroi latérale du récipient pour monter le dispositif de détection de niveau de liquide. Toutefois, compte tenu du fait que l'ensemble de la ligne de transmission et des transducteurs doit être disposé à l'intérieur du récipient contenant du liquide, le capteur présente un encombrement important à l'intérieur du récipient. De plus, le capteur présente des parties évidées dans lesquelles des déchets ou des boues peuvent venir se loger, ce qui affecte la fiabilité du système.

On connaît par ailleurs par exemple par les documents GB-A-2 137 348 et GB-A-2 076 536 des dispositifs contacteurs à ondes élastiques dans lesquels des dispositifs transducteurs d'émission et de réception sont disposés directement sur la paroi d'un récipient contenant un liquide, ou sont couplés à ladite paroi, et sont utilisés pour détecter la présence d'un liquide à un niveau prédéterminé dans le récipient. Dans ce cas, la détermination de la présence ou de l'absence de liquide repose toutefois sur la détection d'une atténuation de l'amplitude des signaux reçus par le transducteur récepteur, ce qui rend le dispositif relativement peu sensible et peu fiable.

La présente invention vise à remédier aux inconvénients précités et à réaliser un dispositif de détection de présence de liquide qui soit d'une mise en oeuvre simple et permette de déterminer de façon fiable si un niveau a été atteint par un liquide dans un réservoir.

L'invention vise en particulier à réaliser un dispositif compact qui puisse être facilement monté sur le réservoir tel qu'une cuve, qui présente une bonne sensibilité et une bonne fiabilité même si à l'intérieur de la cuve contenant le liquide dont le niveau est à détecter l'atmosphère est très corrosive, la température est élevée, ou le liquide est chargé de déchets, boues ou autres particules solides.

L'invention vise encore à réaliser un dispositif qui permette d'éviter le perçage d'ouvertures dans le réservoir au voisinage du niveau devant être contrôlé.

Ces buts sont atteints grâce à un dispositif contacteur à ondes élastiques de Lamb pour détecter la présence ou l'absence d'un liquide à un niveau prédéterminé N dans un réservoir présentant une paroi d'épaisseur e, le dispositif comprenant des moyens transducteurs d'émission et des moyens transducteurs de réception disposés au voisinage dudit niveau prédéterminé N dudit réservoir à l'extérieur d'une portion de paroi du réservoir qui constitue une plaque de détection dont au moins une face est susceptible d'être mise en contact avec le liquide et à laquelle sont rattachés d'une part lesdits moyens transducteurs d'émission destinés à engendrer localement des ondes de Lamb dans ladite plaque et d'autre part lesdits moyens transducteurs de réception destinés à détecter la présence ou l'absence d'ondes de Lamb transmises le long de ladite plaque, des moyens électroniques étant prévus pour assurer le traitement des signaux appliqués aux moyens transducteurs d'émission et délivrés par les moyens transducteurs de réception,
caractérisé en ce que les moyens électroniques comprennent des moyens d'ajustement de la fréquence des signaux appliqués aux moyens transducteurs d'émission pour engendrer dans la plaque le premier mode symétrique So et lui seul des ondes de Lamb, la fréquence d'excitation f des moyens transducteurs d'émission étant ajustée en fonction de l'épaisseur e de ladite plaque à une valeur pour laquelle la vitesse de groupe du premier mode symétrique So des ondes de Lamb est proche de la valeur minimale possible, en ce que les moyens électroniques de traitement comprennent un amplificateur à grand gain dont l'entrée est reliée aux moyens transducteurs de réception et la sortie est reliée aux moyens transducteurs d'émission de manière à former une boucle fermée, un filtre pour n'autoriser des oscillations de ladite boucle fermée qu'à ladite fréquence d'excitation f, et des moyens de détection de la présence d'oscillations à ladite fréquence d'excitation f lorsque le liquide présent dans le réservoir reste au-dessous dudit niveau prédéterminé N, en ce que les moyens transducteurs d'émission et les moyens transducteurs de réception sont disposés sur des pièces en forme de prisme fixées sur la face extérieure de la paroi du réservoir qui constitue la plaque de détection, l'angle θ entre les moyens transducteurs d'émission placés sur les pièces en forme de prisme et la face extérieure de ladite paroi du réservoir, et l'angle θ entre les moyens transducteurs de réception placés sur les pièces en forme de prisme et la face extérieure de ladite paroi du réservoir étant tels que sin θ = ν prisme/ ν plaque, où ν prisme et ν plaque représentent respectivement la vitesse de phase des ondes longitudinales créées dans les pièces en forme de prisme et la vitesse de phase des ondes de Lamb créées dans ladite portion de paroi de réservoir.

La mise en oeuvre d'une boucle oscillante fermée donne lieu à un fonctionnement par tout ou rien beaucoup plus sûr que le fonctionnement basé sur une simple variation d'amplitude. En effet, une boucle n'oscille que si, outre une condition sur l'amplitude, une condition sur la phase est satisfaite. De plus, la raideur d'un système oscillant peut être avantageusement modifiée par le gain de l'amplificateur de la boucle.

Par ailleurs, l'utilisation d'ondes de Lamb selon un mode bien défini permet d'augmenter la fiabilité de la détection.

A titre d'exemple, la plaque de détection peut présenter une épaisseur de quelques millimètres tandis que la fréquence d'excitation f des moyens transducteurs d'émission est de l'ordre de quelques centaines de kilohertz.

Les moyens transducteurs d'émission et les moyens transducteurs de réception sont disposés au voisinage dudit niveau prédéterminé directement sur la face extérieure de la paroi du réservoir qui constitue ladite plaque de détection.

Cette disposition simplifie grandement l'installation et la maintenance du dispositif contacteur et permet d'augmenter la durée de vie de celui-ci.

Selon un premier mode de réalisation, les moyens transducteurs d'émission et les moyens transducteurs de réception sont alignés verticalement et sont disposés de part et d'autre dudit niveau prédéterminé.

Selon un deuxième mode de réalisation, les moyens transducteurs d'émission et les moyens transducteurs de réception sont alignés horizontalement et sont situés chacun à cheval sur ledit niveau prédéterminé ou de façon à affleurer ledit niveau prédéterminé.

D'autres caractéristiques et avantages de l'invention ressortiront de la description suivante de modes particuliers de réalisation, donnés à titre d'exemples, en référence aux dessins annexés sur lesquels :

– la figure 1 est une vue schématique en perspective d'un réservoir, auquel est applicable la présente invention et qui comporte des dispositifs contacteurs selon trois configurations différentes,

– les figures 2 à 4, montrent des vues en coupe d'une plaque de détection munie de moyens transducteurs d'émission et de moyens transducteurs de réception, selon trois variantes de réalisation, la coupe étant prise suivant un plan perpendiculaire aux faces principales de la plaque,

– la figure 5 est une vue de face d'une plaque de détection verticale munie à sa partie supérieure de moyens transducteurs d'émission et de moyens transducteurs de réception selon une forme de réalisation particulière possible,

– les figures 6 et 7 montrent la forme d'un signal délivré par les moyens transducteurs de réception lorsqu'il y a respectivement absence et présence de liquide au niveau prédéterminé contrôlé par le dispositif contacteur,

– la figure 8, montre des courbes représentant pour une plaque de détection notamment en verre les vitesses de phase des premiers modes symétrique So et antisymétrique Ao en fonction du produit de la fréquence d'excitation des moyens transducteurs d'émission par l'épaisseur de la plaque de détection, et

– la figure 9 montre le schéma synoptique des circuits électroniques d'un exemple de dispositif électronique de traitement à boucle oscillante utilisant les propriétés de ligne à retard de la plaque de détection conformément à l'invention.

Afin de faciliter la compréhension de la suite de la description, on rappellera d'abord que les ondes élastiques se propagent dans une plaque isotrope sous la forme soit d'un mouvement de cisaillement parallèle aux faces de la plaque soit de mouvements comprenant une composante longitudinale et une composante transversale perpendiculaire aux faces de la plaque et appelés ondes de Lamb. Le déplacement résultant des faces de la plaque est symétrique ou antisymétrique par rapport au plan médian. La proportion des deux types de composantes varie avec la fréquence. Elles s'entretiennent mutuellement puisque la réflexion d'une composante longitudinale donne naissance à une composante transversale et réciproquement.

Les ondes de Lamb peuvent être engendrées à l'aide d'un transducteur à ondes de volume disposé soit sur le chant de la plaque, droit ou biseauté, soit sur un prisme lié à la plaque.

Une condition pour que des ondes de Lamb soient produites est que l'épaisseur de la plaque soit de l'ordre de la valeur de la longueur d'onde λ correspondant au rapport entre la vitesse de phase de l'onde guidée et la fréquence de cette onde guidée.

Le principe du dispositif contacteur selon l'invention consiste à lancer localement des ondes de Lamb dans une plaque de détection dont au moins une face est en contact avec le liquide, et à détecter ces ondes de Lamb un peu plus loin, à une distance qui peut être de l'ordre de 5 à 20 cm. En pratique, cette distance est choisie en fonction de la sensibilité de la plaque de détection qui est conditionnée en particulier par la largeur de la portion active, elle-même dépendante de la taille des transducteurs. En l'absence de liquide en contact avec la plaque de détection sur le trajet des ondes de Lamb, le transducteur récepteur reçoit un signal. En présence de liquide, il n'en reçoit plus, car les ondes de Lamb ne se réfléchissent plus sur la face de la paroi en contact avec le liquide. Les ondes de Lamb pénètrent dans le liquide et sont "absorbées" par celui-ci, de sorte que le récepteur ne reçoit plus de signal ou ne reçoit qu'un signal atténué.

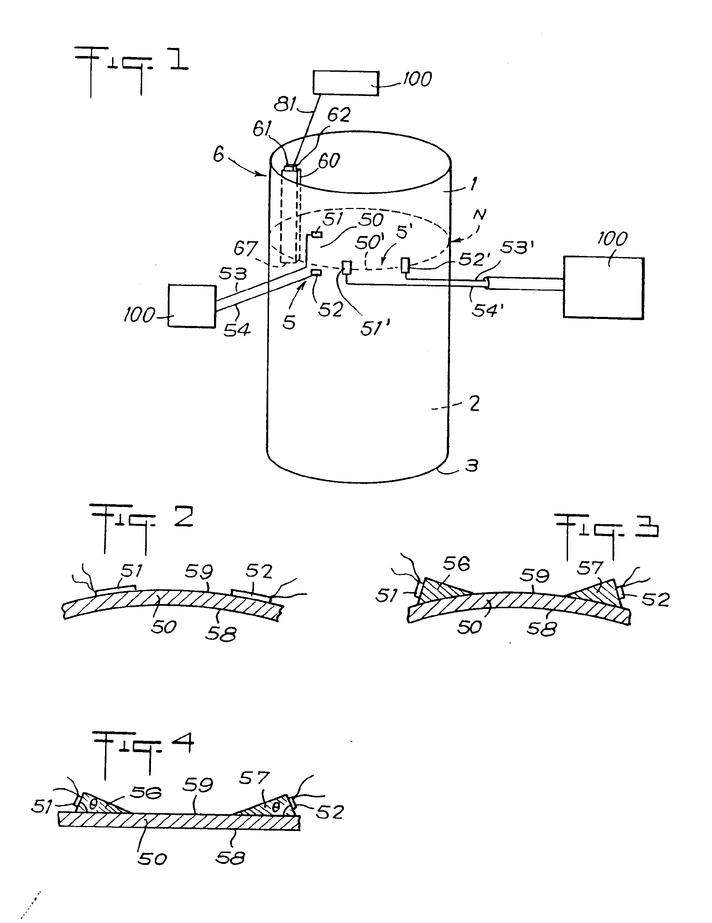

La figure 1 montre de façon schématique la disposition des éléments principaux d'un dispositif contacteur selon l'invention dans un réservoir 1 présentant un fond 3 et contenant un liquide 2 dont il convient de détecter la présence ou l'absence à un niveau prédéterminé N.

Un dispositif contacteur 5, 5', 6 comprend essentiellement des moyens transducteurs d'émission 51, 51', 61 et des moyens transducteurs de réception 52, 52', 62 disposés au voisinage du niveau prédéterminé N et montés sur une plaque de détection 50, 50', 60.

Dans le cas des dispositifs 5 et 5', c'est une portion de la paroi latérale du réservoir 1 qui constitue directement la plaque de détection 50, 50' tandis que le dispositif 6 utilise une plaque de détection 60 indépendante qui est introduite à l'intérieur du réservoir 1 à partir de la partie supérieure de celui-ci et présente une extrémité inférieure 67 située à une faible distance, de l'ordre de quelques millimètres sous le niveau N.

Le dispositif contacteur 5 comprend un transducteur émetteur 51 et un transducteur récepteur 52 alignés verticalement, le transducteur récepteur 52 étant disposé un peu au-dessous du niveau N tandis que le transducteur émetteur 51 est situé un peu au-dessus du niveau N par exemple à une distance de l'ordre de 15 cm par rapport au transducteur récepteur 52. Il est naturellement possible d'échanger les positions des transducteurs émetteur 51 et récepteur 52.

Le dispositif contacteur 5' comprend un transducteur émetteur 51' et un transducteur récepteur 52' qui sont alignés horizontalement et sont situés chacun de manière à affleurer le niveau N ou à être placés à cheval sur ce niveau N.

Le dispositif contacteur 6 comprend un transducteur émetteur 61 et un transducteur récepteur 62 qui sont disposés au voisinage de l'extrémité supérieure de la plaque 60, qui est indépendante de la paroi du réservoir 1.

Sur la figure 1, les références 53, 54, 53', 54', 81 désignent de façon symbolique les liaisons entre les transducteurs émetteur ou récepteur 51, 52, 51', 52', 61, 62 d'une part et les circuits électroniques de traitement 100 de chacun des dispositifs contacteurs 5, 5', 6 qui peuvent être délocalisés par rapport au réservoir 1.

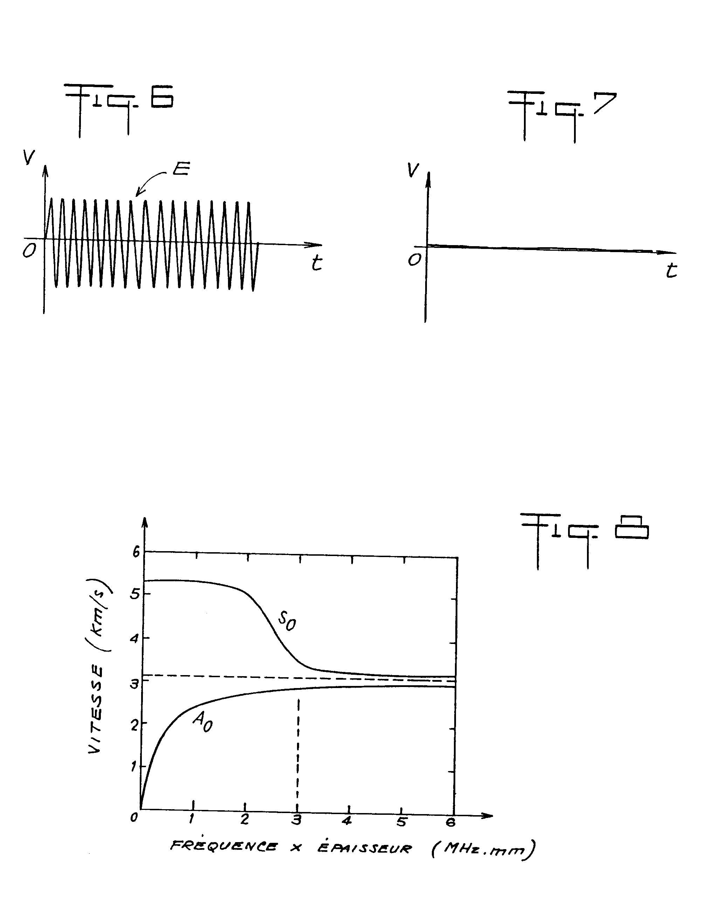

Les figures 2 à 5 montrent différents modes de réalisation possibles pour la plaque de détection 50, 60 d'un dispositif contacteurs 5, 5', 6 et la disposition des transducteurs émetteur ou récepteur 51, 52, 62.

Sur la figure 2, on voit des transducteurs émetteur 51 et récepteur 52 par exemple du type piézoélectrique, qui se présentent sous la forme de barrettes collées directement sur la face externe 59 de la partie de paroi constituant une plaque de détection 50, et dont la face interne 58 est susceptible d'être mise en contact avec le liquide 2.

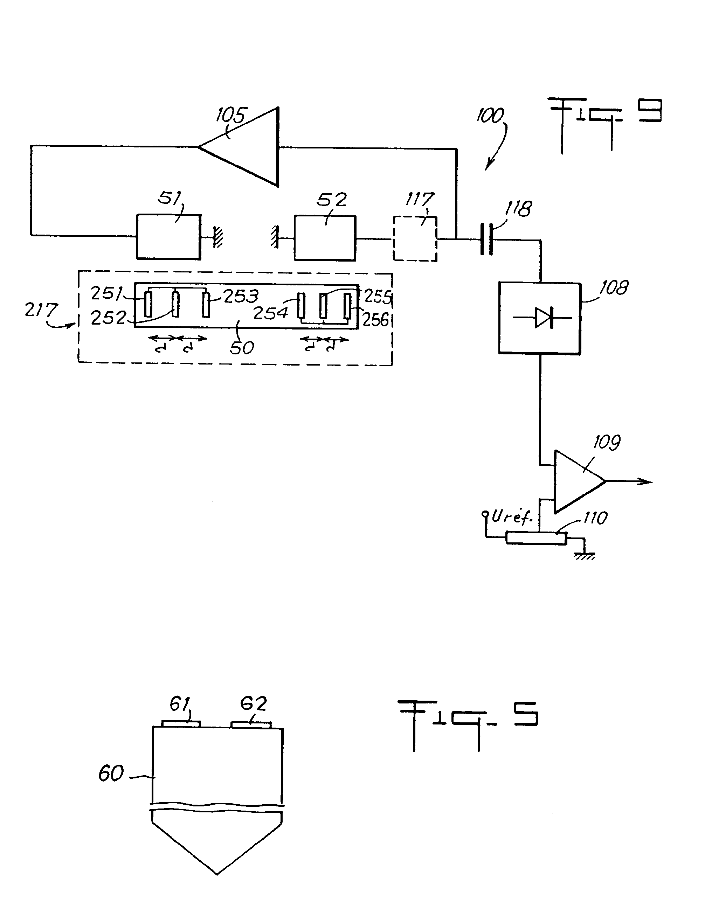

Sur les figures 3 et 4, on voit des transducteurs émetteur 51 et récepteur 52 qui peuvent être du même type que les transducteurs de la figure 2, mais sont disposés sur des pièces 56, 57 en forme de prisme, elles-mêmes rapportées sur la face externe 59 de la partie de paroi constituant la plaque de détection 50. Dans ce cas, l'angle θ entre un transducteur 51, 52 et la face 59 de la plaque 50 est tel que

$$\sin \theta = \frac{\lambda\ \text{prisme}}{\lambda\ \text{plaque}} = \frac{v\ \text{prisme}}{v\ \text{plaque}} \quad (1)$$

où λ prisme et λ plaque représentent la longueur d'onde respectivement des ondes longitudinales dans un prisme 56, 57 et des ondes de Lamb dans la plaque 50, et v prisme et v plaque représentent la vitesse de phase respectivement des ondes longitudinales dans un prisme 56, 57 et des ondes de Lamb dans la plaque 50.

Comme on peut le voir sur les figures 2 à 4, le dispositif selon l'invention peut être mis en oeuvre avec des plaques 50 courbes (figures 2 et 3) aussi bien qu'avec des plaques planes (figure 4).

Dans le cas de dispositifs contacteurs 6 comprenant une plaque 60 indépendante de la paroi du réservoir 1 et introduite verticalement dans le réservoir 1, les transducteurs émetteur 61 et récepteur 62 distincts peuvent être placés directement sur le chant droit (Fig 5) ou biseauté de l'extrémité de la plaque de détection 60 opposée à l'extrémité 67 située au voisinage du niveau N (Fig 1). Toutefois, il est possible de disposer un transducteur 61 sur un prisme 66 rapporté sur une face principale de la plaque 60 dans les mêmes conditions que pour les modes de réalisation des figures 3 et 4. La figure 5 montre le cas d'une plaque de détection verticale 60 comprenant des transducteurs émetteur 61 et récepteur 62 distincts, disposés côte à côte sur la face d'extrémité plane supérieure de la plaque 60 dont l'extrémité inférieure plongée dans le liquide est en forme de pointe avec des pans inclinés à 45°.

Les plaques de détection 50, 60 peuvent être réalisées en différents matériaux isolants tels que du verre ou un matériau métallique. Dans le cas de plaques de détection métalliques, il est possible d'utiliser en particulier, des alliages d'aluminium tels que le duralumin ou des aciers inoxydables.

La largeur de la plaque de détection 50, 60 qui doit être au moins égale à la longueur des transducteurs 51, 52, 61, 62 en forme de barreaux ou de plaquettes, peut être par exemple de l'ordre de trois à huit centimètres.

Une caractéristique importante de la présente invention réside dans le fait que les moyens électroniques 100 sont ajustés pour exciter les transducteurs émetteurs 51, 51', 61 de manière à engendrer dans la plaque 50, 50', 60 le premier mode symétrique So et lui seul des ondes de Lamb, la fréquence d'excitation f des transducteurs d'émission 51, 51', 61 étant déterminée de telle sorte que le produit de cette fréquence d'excitation f exprimée en megahertz par l'épaisseur e de la plaque, exprimée en millimètres, soit supérieur ou égal à environ 2,5 et de préférence compris entre 2,5 et 3.

La plaque de détection 50, 50', 60 peut ainsi présenter une épaisseur de quelques millimètres, par exemple 4 mm, tandis que la fréquence d'excitation f est de l'ordre de quelques centaines de kilohertz, par exemple 700 kHz. Il est aussi possible d'utiliser des plaques de détection dont l'épaisseur est de l'ordre de 1,5 mm tandis que la fréquence d'excitation est de l'ordre de 2 MHz.

Selon la présente invention, le dispositif contacteur utilise ainsi des ondes de Lamb dont la vitesse de phase est relativement faible et la vitesse de groupe est proche du minimum, tout en conservant le seul premier mode symétrique (mode So), afin de disposer d'une grande sensibilité tout en utilisant des dispositifs électroniques de traitement 100 dont la structure est relativement simple.

La figure 8 montre le courbe donnant la vitesse de phase (en km/s) des ondes de Lamb en fonction du produit de la fréquence d'excitation (exprimée en MHz) par l'épaisseur e de la plaque de détection (exprimée en mm) pour des matériaux de plaque tels que le verre ou le duralumin.

La figure 6 représente la forme du signal délivré par un transducteur récepteur 52, 52', 62 lorsqu'aucun liquide n'est en contact avec la plaque de détection au niveau N de la figure 1. On voit un signal oscillatoire E de forte amplitude correspondant à des oscillations en boucle fermée, la plaque 50, 50', 60 constituant une ligne à retard dans laquelle se propagent des ondes de Lamb sans perturbation du transducteur émetteur 51, 51', 61 au transducteur récepteur 52, 52', 62.

La figure 7 montre au contraire la forme du signal délivré par un transducteur récepteur 52, 52', 62 lorsqu'un liquide vient en contact avec la plaque de détection au niveau N. L'oscillation E de la figure 6 a disparu du fait que les composantes des ondes de Lamb n'ont pas pu se réfléchir sur la face de la plaque de détection en contact avec le liquide.

On a représenté sur la figure 9 un mode de réalisation de dispositif électronique 100 de traitement de signaux qui est combiné avec les transducteurs émetteur 51, 51', 61 et récepteur 52, 52', 62 placés sur la face externe de la paroi du réservoir 1 ou à l'extrémité de la plaque 60, et constitue un aspect important de la présente invention.

Selon ce mode de réalisation, un amplificateur 105 à grand gain présente une entrée reliée directement au transducteur récepteur 52 et une sortie reliée directement au transducteur émetteur 51 de manière à former une boucle fermée avec l'ensemble des transducteurs émetteur 51 et récepteur 52 qui constituent avec la plaque 50 une ligne à retard à ondes de Lamb montée en cascade avec l'amplificateur 105. Le gain de l'amplificateur 105 est réglé de manière à compenser ou surcompenser les pertes de la ligne à retard et permettre ainsi au système d'osciller. Le circuit composé de l'amplificateur 105, de l'ensemble des transducteurs émetteur 51 et récepteur 52 et d'un filtre 117 ou 217 peut être mis en oscillations sur une fréquence f prédéterminée correspondant à la fréquence d'excitation choisie pour le transducteur émetteur 51, lorsque la plaque de détection 50 n'est pas en contact avec du liquide. La mise en contact de liquide avec l'une des faces de la plaque 50 lorsque le liquide atteint le niveau prédéterminé N de la figure 1, provoque l'interruption de la transmission d'ondes de Lamb vers le transducteur récepteur 52 et l'arrêt des oscillations.

La détection de la présence ou de l'absence d'oscillations, par exemple en sortie du transducteur récepteur 52 peut-être effectuée à l'aide de circuits 108 à 110 reliés par un condensateur de liaison 118 au transducteur 52. Les niveaux de tension disponibles dans la boucle oscillante, par exemple sur les électrodes du transducteur 52 ; 61 sont appliqués à un circuit 108 de redressement double alternance qui délivre un signal continu de tension sur une entrée d'un comparateur 109 dont l'autre entrée reçoit un signal de tension de référence $U_{ref}$ fourni par un pont diviseur 110 à partir d'une tension continue stabilisée. La sortie du comparateur 109 permet de fournir ou non un signal selon que la boucle oscille (Fig 6) en l'absence de liquide au niveau prédéterminé N, ou n'oscille plus (Fig 7) par suite de la montée du niveau de liquide jusqu'au niveau N.

Le fonctionnement des circuits de la figure 9 est naturellement réversible et l'amplificateur 105 associé aux transducteurs émetteur 51 et récepteur 52 et au filtre 117 ou 217 définissant une bande de fréquences d'oscillation autorisées, se comporte de nouveau en oscillateur en régime sinusoïdal dès que la plaque de détection 50 n'est plus en contact avec du liquide.

Selon un mode de réalisation particulièrement avantageux mettant en oeuvre les circuits électroniques de la figure 9, les transducteurs émetteur 51 et récepteur 52 peuvent être conçus de manière à définir un filtre spatial 217 qui évite l'utilisation d'un filtre électronique classique 117. Dans ce cas, le transducteur émetteur 51 comprend plusieurs éléments 251, 252, 253 excités en parallèle et écartés spatialement les uns des autres le long de la plaque 50 d'une distance égale à la longueur d'onde λ du premier mode symétrique So des ondes de Lamb qui se propagent lorsque le transducteur d'émission 51 est excité et le transducteur récepteur 52 comprend également plusieurs éléments 254, 255, 256 montés électriquement en parallèle qui peuvent être avantageusement en nombre égal à celui des éléments du transducteur émetteur 51 et écartés les uns des autres d'une distance égale à la longueur d'onde λ du premier mode symétrique So des ondes de Lamb.

Selon une caractéristique particulière, les circuits électroniques 100 peuvent comporter des moyens pour n'autoriser que pendant des périodes de temps successives limitées la mise en oscillation de la boucle fermée constituée par l'amplificateur 105, la ligne à retard constituée par la plaque 50 entre les transducteurs émetteur 51 et récepteur 52, et le filtre 117 ou 217. Ceci permet d'éviter, dans le cas de récipients de petites dimensions, un accrochage éventuel sur des retards qui seraient provoqués par des réflexions parasites sur les parois du récipient. Toutefois, on peut noter que de telles réflexions parasites ne conduiraient, avec un système de fonctionnement permanent, qu'à une modulation supplémentaire de l'oscillation qui n'affecterait pas la fiabilité du système.

Par ailleurs, on notera que le filtre 117 peut être constitué dans certains cas par une simple inductance qui définit avec le transducteur associé un circuit LC présentant une fréquence propre privilégiée.

## Revendications

1. Dispositif contacteur à ondes élastiques de Lamb pour détecter la présence ou l'absence d'un liquide (2) à un niveau prédéterminé (N) dans un réservoir (1) présentant une paroi d'épaisseur (e), le dispositif comprenant des moyens transducteurs d'émission (51; 51′) et des moyens transducteurs de réception (52; 52′) disposés au voisinage dudit niveau prédéterminé (N) dudit réservoir (1) à l'extérieur d'une portion de paroi du réservoir (1) qui constitue une plaque de détection (50; 50′) dont au moins une face (58) est susceptible d'être mise en contact avec le liquide (2) et à laquelle sont rattachés d'une part lesdits moyens transducteurs d'émission (51; 51′) destinés à engendrer localement des ondes de Lamb dans ladite plaque (50; 50′) et d'autre part lesdits moyens transducteurs de réception (52; 52′) destinés à détecter la présence ou l'absence d'ondes de Lamb transmises le long de ladite plaque (50; 50′),des moyens électroniques (100) étant prévus pour assurer le traitement des signaux appliqués aux moyens transducteurs d'émission (51; 51′) et délivrés par les moyens transducteurs de réception (52; 52′), caractérisé en ce que les moyens électroniques (100) comprennent des moyens d'ajustement de la fréquence des signaux appliqués aux moyens transducteurs d'émission (51; 51′) pour engendrer dans la plaque (50; 50′) le premier mode symétrique (So) et lui seul des ondes de Lamb, la fréquence d'excitation (f) des moyens transducteurs d'émission (51; 51′) étant ajustée en fonction de l'épaisseur (e) de ladite plaque (50; 50′) a une valeur pour laquelle la vitesse de groupe du premier mode symétrique So des ondes de Lamb est proche de la valeur minimale possible, en ce que les moyens électroniques (100) de traitement comprennent un amplificateur (105) à grand gain dont l'entrée est reliée aux moyens transducteurs de réception (52) et la sortie est reliée aux moyens transducteurs d'émission (51) de manière à former une boucle fermée, un filtre (117, 217) pour n'autoriser des oscillations de ladite boucle fermée qu'à ladite fréquence d'excitation (f), et des moyens (118, 108 à 110) de détection de la présence d'oscillations à ladite fréquence d'excitation (f) lorsque le liquide (2) présent dans le réservoir (1) reste au-dessous dudit niveau prédéterminé (N), en ce que les moyens transducteurs d'émission (51) et les moyens transducteurs de réception (52) sont disposés sur des pièces en forme de prisme (56, 57) fixées sur la face extérieure (59) de la paroi du réservoir (1) qui constitue la plaque de détection (50), l'angle θ entre les moyens transducteurs d'émission (51) placés sur les pièces en forme de prisme (56) et la face extérieure (59) de ladite paroi (1) du réservoir, et l'angle θ entre les moyens transducteurs de réception (52) placés sur les pièces en forme de prisme (57) et la face extérieure (59) de ladite paroi (1) du réservoir étant tels que sin θ = ν prisme/ ν plaque, où ν prisme et ν plaque représentent respectivement la vitesse de phase des ondes longitudinales créées dans les pièces en forme de prisme (56,5 7) et la vitesse de phase des ondes de Lamb créées dans ladite portion de paroi de réservoir (1).

2. Dispositif selon la revendication 1, caractérisé en ce que la plaque de détection (50; 50′) présente une épaisseure de quelques millimètres et en ce que la fréquence d'excitation (f) des moyens transducteurs d'émission (51; 51') est de l'ordre de quelques centaines de kilohertz.

3. Dispositif selon l'une quelconque des revendications 1 et 2, caractérisé en ce que les moyens transducteurs d'émission (51) et les moyens transducteurs de réception (52) sont alignés verticalement et sont disposés de part et d'autre dudit niveau prédéterminé (N).

4. Dispositif selon l'une quelconque des revendication 1 et 2, caractérisé en ce que les moyens transducteurs d'émission (51) et les moyens transducteurs de réception (52) sont alignés horizontalement et sont situés chacun à cheval sur ledit niveau prédéterminé (N) ou de façon à affleurer ledit niveau prédéterminé (N).

5. Dispositif selon l'une quelconque des revendications 1 à 4, caractérisé en ce que la plaque de détection (50) est en un matériau isolant tel que le verre.

6. Dispositif selon l'une quelconque des revendications 1 à 4, caractérisé en ce que la plaque de détection (50) est en un matériau métallique tel qu'un alliage d'aluminium ou un acier inoxydable.

7. Dispositif selon l'une quelconque des revendications 1 à 6, caractérisé en ce que ladite plaque de détection (50) est incurvée.

8. Dispositif selon l'une quelconque des revendications 1 à 6, caractérisé en ce que ladite plaque de détection (50) est plane.

9. Dispositif selon la revendication 5 ou la revendication 6, caractérisé en ce que la fréquence (f) des moyens transducteurs d'émission (51;51') est ajustée à une valeur, exprimée en mégahertz, qui est supérieure ou égale au quotient 2,5/e où e représente l'épaisseur de ladite plaque de détection (50,50') exprimée en millimètres.

10. Dispositif selon la revendication 9, caractérisé en ce que la fréquence (f) des moyens transducteurs d'émission (51;51') est ajustée à une valeur, exprimée en mégahertz, qui est comprise entre 2,5/e et 3/e, où e représente l'épaisseur de ladite plaque de détection (50,50') exprimée en millimètres.

**Patentansprüche**

1. Schaltvorrichtung, basierend auf elastischen Lamb-Wellen zum Erfassen des Vorhandenseins oder der Abwesenheit einer Flüssigkeit (2) auf einem vorbestimmten Niveau (N) in einem Behälter (1), mit einer Seitenwand der Dicke (e), wobei die Vorrichtung Emissionswandlereinrichtungen (51; 51') und Aufnahmewandlereinrichtungen (52; 52') aufweist, die in der Nähe des vorbestimmten Niveaus (N) des Reservoirs (1) außerhalb eines Bereiches der Seitenwände des Behälters (1) angeordnet sind, die eine Erfassungsplatte (50; 50') aufweist, von der wenigstens eine Seite (58) geeignet ist, in Kontakt mit der Flüssigkeit (2) gesetzt zu werden und mit der einerseits die Emissionswandlereinrichtungen (51; 51') verbunden sind, die dazu bestimmt sind, örtlich Lamb-Wellen in der Platte (50; 50') zu erzeugen, und andererseits die Aufnahmewandlereinrichtungen (52; 52') verbunden sind, die dazu dienen, das Vorhandensein oder die Abwesenheit von Lamb-Wellen zu erfassen, die in entlang der Platte (50; 50') übertragen werden, wobei elektronische Einrichtungen (100) vorgesehen sind, um die Verarbeitung der auf die Emissionswandlereinrichtungen (51; 51') aufgebrachten Signale und von den Aufnahmewandlereinrichtungen (52; 52') gelieferten Signale sicherzustellen,

**dadurch gekennzeichnet,** daß die elektronischen Einrichtungen (100) Einstelleinrichtungen der Frequenz der auf die Emissionswandlereinrichtungen (51; 51') aufgebrachten Signale aufweisen, um in der Platte (50; 50') den ersten symmetrischen Modus (So) und nur ihn der Lamb-Wellen zu erzeugen, wobei die Anregungsfrequenz (f) der Emissionswandlereinrichtungen (51; 51') eingestellt wird in Abhängigkeit der Dicke (e) der Platte (50; 5o') auf einen Wert, für den die Gruppengeschwindigkeit des ersten symmetrischen Modus (So) der Lamb-Wellen in der Nähe des möglichen minimalen Werts ist, daß die elektronischen Verarbeitungseinrichtungen (100) einen Verstärker (105) von großer Verstärkung aufweisen, dessen Eingang mit den Aufnahmewandlereinrichtungen (52) und dessen Augang mit den Emissionswandlereinrichtungen (51) derart verbunden ist, daß eine geschlossene Schleife gebildet wird, einen Filter (117, 217) aufweisen, um Schwingungen der geschlossenen Schleife nur bei der Anregungsfrequenz (f) zu erlauben und Einrichtungen (118, 108-110) der Erfassung des Vorhandenseins von Schwingungen bei der Anregungsfrequenz (f) aufweisen, wenn die Flüssigkeit (2), die in dem Behälter (1) vorhanden ist, unterhalb des vorbestimmten Niveaus (N) verbleibt, daß die Emissionswandlereinrichtungen (51) und die Aufnahmewandlereinrichtungen (52) auf Prismenformteilen (56, 57) angeordnet sind, die auf der Außenseite (59) der Seitenwand des Behälters (1) befestigt sind, die die Erfassungsplatte (50) bildet, wobei der Winkel θ zwischen den Emissionswandlereinrichtun-

gen (51), die auf den prismenformartigen Teilen (56) plaziert sind, und der Außenseite (59) der Seitenwand (1) des Behälters, und der Winkel θ zwischen den Aufnahmewandlereinrichtungen (52), die auf den Prismenformteilen (57) plaziert sind, und der Außenseite (59) der Seitenwand (1) des Behälters gleich sind wie sin θ = ν Prisma/ν Platte, wobei ν Prisma und ν Platte entsprechend die Phasengeschwindigkeit der Längswellen, die in den Teilen in Prismenform (56, 57) erzeugt werden bzw. die Phasengeschwindigkeit der Lamb-Wellen, die in dem Bereich der Seitenwand des Behälters (1) erzeugt werden, darstellen.

2. Vorrichtung nach Anspruch 1, **dadurch gekennzeichnet,** daß die Erfassungsplatte (50; 50′) eine Dicke (e) von einigen Millimetern aufweist, und daß die Andrehungsfrequenz (f) der Emissionswandlereinrichtungen (51; 51′) in der Größenordnung von einigen 100 KHz ist.

3. Vorrichtung nach einem der Ansprüche 1 oder 2, **dadurch gekennzeichnet,** daß die Emissionswandlereinrichtungen (51) und die Aufnahmewandlereinrichtungen (52) vertikal ausgerichtet sind und beiderseits des vorbestimmten Niveaus (N) angeordnet sind.

4. Vorrichtung nach Anspruch 1 oder 2, **dadurch gekennzeichnet,** daß die Emissionswandlereinrichtungen (51) und die Aufnahmewandlereinrichtungen (52) horizontal ausgerichtet sind und jeweils beiderseits auf dem vorbestimmten Niveau (N) angeordnet sind oder derart, daß sie mit dem vorbestimmten Niveau (N) fluchten.

5. Vorrichtung nach einem der Ansprüche 1 bis 4, **dadurch gekennzeichnet,** daß die Erfassungsplatte (50) aus einem isolierenden Material, wie beispielsweise Glas, gebildet ist.

6. Vorrichtung nach einem der Ansprüche 1 bis 4, **dadurch gekennzeichnet,** daß die Erfassungsplatte (50) aus einem metallischen Material, wie beispielsweise einer Aluminiumlegierung oder einem nicht-oxidierbaren Stahl gebildet ist.

7. Vorrichtung nach einem der Ansprüche 1 bis 6, **dadurch gekennzeichnet,** daß die Erfassungplatte (50) gewölbt ist.

8. Vorrichtung nach einem der Ansprüche 1 bis 6, **dadurch gekennzeichnet,** daß die Erfassungsplatte (50) eben ist.

9. Vorrichtung nach Anspuch 5 oder nach Anspruch 6, **dadurch gekennzeichnet,** daß die Frequenz (f) der Emissionswandlereinrichtungen (51; 51′) auf einen Wert eingestellt ist, der in MHz ausgedrückt wird, der größer oder gleich dem Quotienten 2,5/e ist, wobei e die Dicke der Erfassungsplatte (50; 50′), ausgedrückt in Millimetern, ist.

10. Vorrichtung nach Anspruch 9, **dadurch gekennzeichnet,** daß die Frequenz (f) der Emissionswandlereinrichtungen (51; 51′) auf einen wert eingestellt wird, ausgedrückt in MHz, der zwischen 2,5/e und 3e liegt, wobei e die Dicke der Erfassungsplatte (50; 50′), ausgedrückt in Millimetern, ist.

**Revendications**

1. Sensor device using Lamb elastic waves for detecting the presence or absence of a liquid (2) at a predetermined level (N) in a tank (1) having a wall of thickness (e), the device comprising transmitter transducer means (51; 51′) and receiver transducer means (52; 52′) disposed in the vicinity of said predetermined level (N) of said tank (1) on the outside of a portion of the wall of the tank (1), which wall constitutes a detection plate (50; 50′) having at least one face (58) that may come into contact with the liquid (2) and to which are attached, on the one hand, said transmitter transducer means (51; 51′) for locally generating Lamb waves in said plate (50; 50′), and on the other hand, said receiver transducer means (52; 52′) for detecting the presence or the absence of Lamb waves transmitted along said plate (50; 50′), electronic means (100) being provided for processing the signals applied to the transmitter transducer means (51; 51′) and delivered by the receiver transducer means (52; 52′),
characterized in that the electronic means (100) comprise means for adjusting the frequency of the signals applied to the transmitter transducer means (51; 51′) in order to generate the first symmetrical mode (So) of Lamb waves in the plate (50; 50′), and that mode only, the excitation frequency (f) of the transmitter transducer means (51; 51′) being adjusted as a function of the thickness (e) of said plate (50; 50′) to a value for which the group velocity of the first symmetrical mode (So) of the Lamb waves is close to the possible minimum value, in that the electronic signal processing (100) means include a high gain amplifier (105) whose input is connected to the receiver transducer means (52) and whose output is connected to the transmitter transducer means (51), thereby forming a closed loop, a filter (117, 217) for allowing said closed loop to oscillate only at said excitation frequency (f), and means (118, 108 to 110) for detecting the presence of oscillation at said excitation frequency (f) when the liquid (2) in the tank (1) remains below said predetermined level (N), in that the transmitter transducer means (51) and the receiver transducer means (52) are disposed on prism-shaped pieces (56, 57) fixed to the outside face (59) of the wall of the tank (1) which constitutes the detection plate (50), the angle $\theta$ between the transmitter transducer means (51) placed on the prism-shaped pieces (56) and the outside face (59) of said wall (1) of the tank, and the angle $\theta$ between the receiver transducer means (52) placed on the prism-shaped pieces (57) and the outside face (59) of said wall (1) of the tank being such that $\sin \theta = \nu$ prism/ $\nu$ plate, where $\nu$ prism and $\nu$ plate represent the phase velocity respectively of the longitudinal waves generated in the prism-shaped pieces (56, 57) and the phase velocity of the Lamb waves generated in said portion of the wall of the tank (1).

2. Device according to claim 1, characterized in that the detection plate (50; 50′) is a few millimeters thick (e) and in that the excitation frequency (f) of the transmitter transducer means (51; 51′) is of the order of a few hundreds of kilohertz.

3. Device according to any one of claims 1 and 2, characterized in that the transmitter transducer means (51) and the receiver transducer means (52) are vertically aligned and are disposed on either side of said predetermined level (N).

4. Device according to any one of claims 1 and 2, characterized in that the transmitter transducer means (51) and the receiver transducer means (51) are horizontally aligned and each of them overlies said predetermined level (N), or is flush therewith.

5. Device according to any one of claims 1 to 4, characterized in that the detection plate (50) is made of an insulating material such as glass.

6. Device according to any one of claims 1 to 4, characterized in that the detection plate (50) is made of a métal such as a stainless steel or an aluminum alloy.

7. Device according to any one of claims 1 to 6, characterized in that said detection plate (50) is curved.

8. Device according to any one of claims 1 to 6, characterized in that said detection plate (50) is plane.

9. Device according to claim 5 or claim 6, characterized in that the frequency (f) of the transmitter transducer means (51; 51′) is adjusted to a value, expressed in megahertz, which is not less than the quotient 2,5/e where e represents the thickness of said detection plate (50, 50′) expressed in millimeters.

10. Device according to claim 9, characterized in that the frequency (f) of the transmitter transducer means (51; 51′) is adjusted to a value, expressed in megahertz, which lies in the range 2.5/e to 3/e, where e represents the thickness of said detection plate (50, 50′) expressed in millimeters.

# Fig. 1

100

81
62
61
60
6
1
51 50
50' 5'
N
67
53'
53
52'
100
100
52
54'
5
51'
54
52
51'
2
3

# Fig. 2

51 59 52
53
50 58
52'

# Fig. 3

56 59 57
51 52
50 58

# Fig. 4

56 59 57
51 θ θ 52
50 58

Fig. 6

Fig. 7

Fig. 8

Fig. 9

105

100

51

52

117

118

108

217

251
252

253

255
256

254

50

109

U ref.

110

Fig. 5

61

62

60